# EUROPEAN PATENT SPECIFICATION

(11) **EP 2 496 431 B1**
(45) Date of publication and mention of the grant of the patent: **16.10.2013**
(21) Application number: 10749697.8
(22) Date of filing: 11.08.2010
(51) Int. Cl.: B60K 15/03, B60K 15/04

(54) **BRACKET SET OF CNG FILLING RECEPTACLES FOR MOTOR VEHICLES**
HALTERUNGSSET VON BEFÜLLAUFNAHMEN FÜR KOMPRIMIERTES ERDGAS (CNG) FÜR KRAFTFAHRZEUGE
ENSEMBLE DE SUPPORTS DE RÉCEPTACLES DE REMPLISSAGE DE GAZ NATUREL COMPRIMÉ POUR VÉHICULES AUTOMOBILES

(30) Priority: 05.11.2009 WO PCT/TH0104/946
(43) Date of publication of application: 12.09.2012
(73) Proprietor: Posirisuk, Surayut, Pasijaroen, Bangkok 10160 (TH); Mulanon, Kasap, Nakhon, Ratchasima Province 30000 (TH)
(72) Inventor: MULANON, Kasap, Ratchasima Province 30000 (TH)
(74) Representative: Spitz, Volker
(86) International application number: PCT/TH2010/000031
(87) International publication number: WO 2011/056155

(56) References cited:
- EP-A2- 1 449 702
- DE-C1- 3 209 007
- DE-U1-202010 005 071
- FR-A1- 2 745 531

## Description

### Field of the Invention

The invention is in the field of the mechanical engineering and product design related to the equipment for CNG system installation for motor vehicles. In particular, the invention relates to a bracket set for CNG filling receptacles for motor vehicles.

### Related Background Art

The purpose of this invention is to develop the type of equipment used in the CNG system for motor vehicles which meets to the needs of the system. Generally, the pipes and filling receptacles of CNG motor vehicles are located in the engine room, then the fuel filler tank and CNG filling receptacle are separated so it is difficult for the driver to find the proper location for parking and refueling. Therefore, there is the idea to add the gas-filling receptacle to the existing fuel filler tank for facilitating CNG refueling, as e.g. shown in EP 1 449 702 A2.

### Description and Object of the Invention

This invention aims to develop the form of CNG filling receptacle installation for motor vehicles within the same socket of fuel filler tank. In this case, the cover of fuel filler tank on motor vehicle will be opened and the driver can choose between fuel and gas. In addition, the components used to mount the bracket sets of gas filling receptacles are designed to be the compatible to the fuel filler tank and it will be easier for the driver in refueling.

### Disclosure of the Invention

A bracket set according to the invention is defined in claim 1. This is the invention of the jigs and fixtures for gas filling receptacles added to the fuel filler tank. The components are designed and made of metal sheets which are cut, drilled and folded to make the work pieces to be mounted for reinforcement. Moreover, the molded plastic components also are used in this case.

### Processes of Parts Invention and Installation

### Steps of Parts Invention

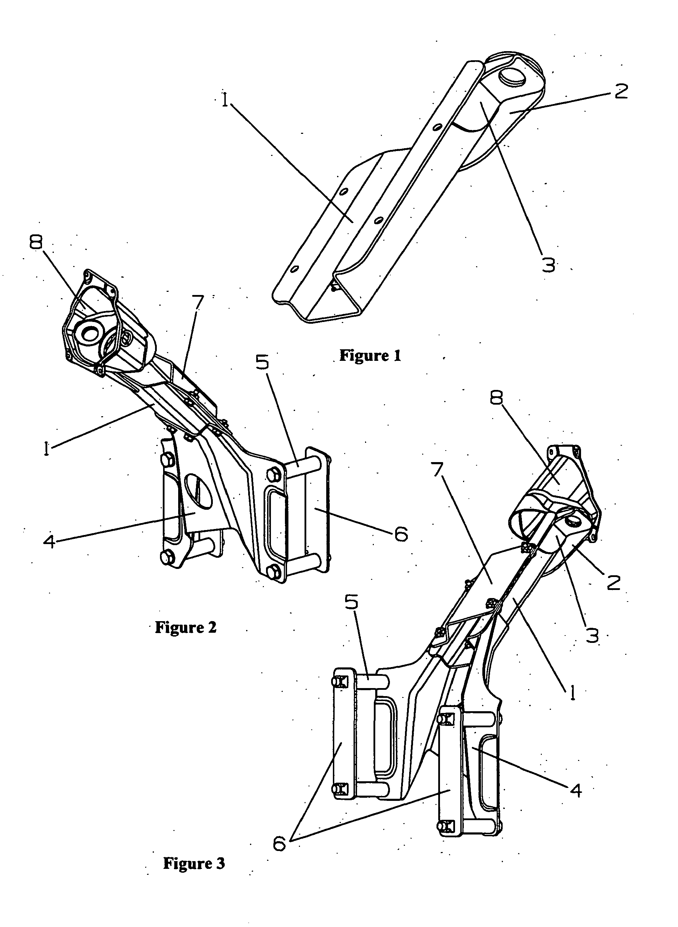

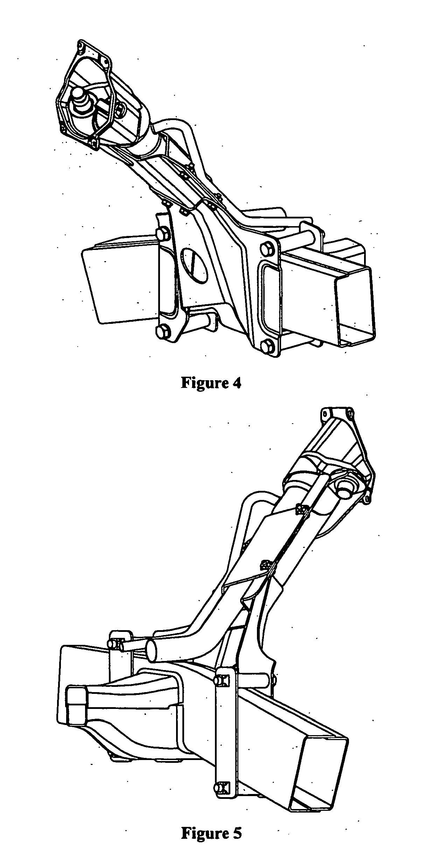

1. Cut the edge of the metal sheet 1 as per the figure 1; drill the passing holes for screws; fold it and make the shape as per the figure 1; connect work pieces with nuts; set the nut holes in the same position as the passing holes and make it as the mounting frame 1 for the gas filling receptacle;
2. Cut the edge of metal sheet 2; drill and fold it, then make it into the shape of the upper mounting board 2 for gas filling receptacle as per the figure 1;
3. Cut the edge of metal sheet 3; drill and fold it; make it into the shape of the lower mounting board for gas filling receptacle as per the figure 1;
4. Put and connect the work pieces 1, 2, 3 together;
5. Cut the edge of metal sheet 4; drill the passing holes for screws and make such work pieces into the shape of the board 4 to be mounted to the frame 1 as per the figure 2;
6. Make the screw case 5 by cutting the metal pipe as per the figure 2;
7. Cut the edge of metal sheet 6; drill the passing holes for screws; connect it with nuts after setting the nut holes in the same position as the passing holes on the board 6 (figures 2 and 3) for locking the jigs and fixtures of the gas filling receptacle to the frame as shown in figures 4 and 5;
8. Cut the edge of metal sheet 7; drill the passing holes for screws; fold and make it into the shape as shown in figures 2 and 3; connect it with nuts; set the nut holes in the same position as the passing holes on the cover 7 (figures 2 and 3) for covering the fuel pipe as shown in figures 4 and 5;
9. Make the plastic cover 8 (figures 2 and 3) for the gas filling receptacle;

### Installation Procedures

1. Connect the gas filling receptacle to the jigs and fixtures (1), (2), (3); lock the filling receptacle with the board;
2. Screw the holding components of the gas filling receptacle (1), (2), (3) in the mounting board;
3. Put the work pieces (1), (2), (3), (4) on the frame; put the flanges of the screw passing holes across the sides of the frame;
4. Put the screw cases (5) in the position of the passing holes of the mounting board (4); thread the screws through the passing holes and tighten them for supporting all of four work pieces;
5. Put the locking board of gas filling receptacle set (6) with the frame; set the screw holes in the same position as the screws and tighten the screws for locking the gas filling receptacle set (1), (2), (3), (4) to the frame;
6. Reassemble the fuel filling receptacle in the old position on motor vehicle;
7. Install the cover of fuel filler tank (7) in the mounting structure of gas filling receptacle (1) and tighten screws;
8. Lay the gas pipe from the system to the gas filling receptacle;
9. Install the plastic cover (8) in the vehicle body; set the passing hole of fuel pipe in the same position as the hole of the fuel pipe and the passing hole of gas filling receptacle before tightening screw.

### Best Mode for Carrying out the Invention

As described in the section "Disclosure of the Invention".

## Claims

1. A bracket set for CNG filling receptacles for motor vehicles, including a mounting frame (1) for the gas filling receptacles, an upper mounting board (2) for filling receptacles and a lower mounting board (3) for filling receptacles, wherein the mounting frame (1), the upper mounting board (12) and the lower mounting board (3) are to be connected together, and further including a plate (4) to be mounted to the frame (1), a screw case (5) and a board (6) for locking the gas filling receptacles to the frame (1, 4), a cover (7) for the fuel filling pipe, and a cover (8) for the gas and fuel filling receptacles.

## Patentansprüche

1. Halterungsset für CNG-Füllanschlüsse für Kraftfahrzeuge, umfassend einen Anbringungsrahmen (1) für die Gas-Füllanschlüsse, eine obere Anbringungsplatte (2) für Füllanschlüsse und eine untere Anbringungsplatte (3) für Füllanschlüsse, wobei der Anbringungsrahmen (1), die obere Anbringungsplatte (12) und die untere Anbringungsplatte (3) miteinander zu verbinden sind, und ferner umfassend eine an den Rahmen (1) anzubringende Platte (4), ein Schraubengehäuse (5) und eine Platte (6) zum Sichern der Gas-Füllanschlüsse an dem Rahmen (1, 4), eine Abdeckung (7) für das Kraftstoff-Füllrohr und eine Abdeckung (8) für die Gas- und KraftstoffFüllanschlüsse.

## Revendications

1. Ensemble d'équerre pour réceptacles de remplissage de GNC pour véhicules automobiles, comprenant un cadre de montage (1) pour les réceptacles de remplissage de gaz, une plaque de montage supérieure (2) pour le remplissage des réceptacles et une plaque de montage inférieure (3) pour le remplissage des réceptacles, dans lequel le cadre de montage (1), la plaque de montage supérieure (2) et la plaque de montage inférieure (3) sont reliées entre eux, et comprenant en outre un plateau (4) destiné à être monté sur le cadre (1), un boîtier à vis (5) et une plaque (6) pour le verrouillage des réceptacles de remplissage de gaz sur le cadre (1, 4), un couvercle (7) pour le tuyau de remplissage de carburant et un couvercle (8) pour les réceptacles de remplissage de gaz et de carburant.
